# EUROPÄISCHE PATENTSCHRIFT

(11) **EP 4 150 308 B1**
(45) Veröffentlichungstag und Bekanntmachung des Hinweises auf die Patenterteilung: **08.10.2025**
(21) Anmeldenummer: 21723955.7
(22) Anmeldetag: 03.05.2021
(51) Int. Cl.: G01L 9/00, G01L 19/00, G01L 19/08

(54) **VERBINDUNGSSTUTZEN FÜR FLUIDFÜHRENDE LEITUNGSSYSTEME**
CONNECTING PIECE FOR FLUID-CONDUCTING LINE SYSTEMS
PIÈCE DE RACCORDEMENT DE SYSTÈMES DE CONDUITS DE FLUIDE

(30) Priorität: 13.05.2020 DE 102020112982
(43) Veröffentlichungstag der Anmeldung: 22.03.2023
(73) Patentinhaber: VOSS Fluid GmbH, 51688 Wipperfürth (DE)
(72) Erfinder: POTT, Harald, 42499 Hückeswagen (DE); BAIER, Martin, 53504 Much (DE)
(74) Vertreter: Dr. Solf & Zapf Patent- und Rechtsanwalts PartG mbB
(86) Internationale Anmeldenummer: PCT/EP2021/061514
(87) Internationale Veröffentlichungsnummer: WO 2021/228596

(56) Entgegenhaltungen:
- WO-A1-2019/171376
- US-A- 2 420 148
- US-A1- 2019 360 883
- US-B1- 6 957 588
- US-B1- 7 434 473

## Beschreibung

Die Erfindung betrifft einen Verbindungsstutzen für fluidführende Leitungssysteme. Der Verbindungsstutzen weist einen entlang einer Fluidkanalachse verlaufenden Fluidkanal auf, wobei der Fluidkanal an zumindest einem ersten Anschlussende und einem zweiten Anschlussende des Verbindungsstutzens mit Leitungskanälen des Leitungssystems verbindbar ist. Zwischen dem ersten Anschlussende und dem zweiten Anschlussende ist ein Messabschnitt ausgebildet, in welchem eine Sensorik zur Druckmessung für ein in dem Fluidkanal fließendes Medium angeordnet ist. Die Sensorik weist dabei eine Verbindungsschnittstelle auf, mit welcher sie mit einer Steuereinheit zur Druckmessung im Fluidkanal verbindbar ist. Es ist eine Steuereinheit zum Verbinden mit der Sensorik zur Druckmessung eines Fluiddrucks des Verbindungsstutzens vorgesehen.

In einem fluidführenden Leitungssystem, insbesondere einem hydraulischen System, können Maximaldrücke bis 3200 bar, insbesondere aber auch Maximaldrücke über 3200 bar entstehen. Herkömmliche Drucksensoren für hydraulische Systeme werden an einem T-Verbindungstutzen oder an einer extra dafür vorgesehenen Bohrung in einen hydraulischen Block eingeschraubt. Dies erfordert einen hohen konstruktiven Aufwand und hohen Platzbedarf. Der Sensor selbst nutzt dann häufig eine Membran aus sensiblen Materialien, die mit einem in einem Fluidkanal befindlichen Medium in Kontakt stehen. Die Medienverträglichkeit ist dabei aufgrund der sensiblen Membran derart eigeschränkt, dass entweder das gesamte Leitungssystem nur für bestimmte Medien tauglich ist oder das Leitungssystem eine Drucküberwachung nur bei ausgewählten Medien ermöglicht. Insbesondere Wasserstoff als Medium ist sehr aggressiv. Daher weisen beispielsweise wasserstoffführende Leitungssysteme eine verringerte Standzeit der bekannten Sensoren auf.

Ein weiterer Nachteil liegt in der Strömungsbeeinflussung durch die Abzweigungen des T-Verbindungsstutzen. An der Abzweigstelle entstehen zum einen Verwirbelungen, welche Strömungsverluste erzeugen, und eine Kavitation. Bei der Kavitation kommt es zu Luftausscheidungen auf Grund von Scherbewegungen im Medium. Temperaturbedingt kommt es zu Verbrennungen der Luftausscheidungen, wodurch, entsprechend dem Dieseleffekt, das Medium, insbesondere ein Öl, altert und sich Ablagerungen bzw. Verbrennungsrückstände sammeln. Kavitation und der Dieseleffekt haben daher zur Folge, dass das Leitungssystem häufiger gewartet werden muss und sich die Standzeit des Leitungssystems verringert.

Die WO 2019/171 376 A1 offenbart eine Druckmessung mittels eines Dehnungsmessstreifens mit einem oder mehreren Dehnmesssensoren, welcher an einem Außenumfang einer Messrohranordnung angeordnet ist. Dabei wird der Dehnungsmessstreifen über eine Bohrung in dem Außenumfang geklebt, so dass der Dehnungsmessstreifen zur Dehnungsmessung in Kontakt mit dem in der Messrohranordnung geführten Fluid gelangt.

Die US 7,434,473 B1 offenbart einen Druckaufnehmer für Leitungen, welche Zement- oder Ölschlamm führen. Die zur Druckmessung benötigte Baugruppe besteht dabei aus zwei Adapterflanschen und dem Druckaufnehmer, wobei der Druckaufnehmer derart zwischen die Adapterflasche eingepasst ist, dass sich eine Nut formt. Überdies ist ein Dehnungsmessstreifen, welcher zwei Dehnmesssensoren umfasst, offenbart.

Die US 2019/360 883 A1 offenbart einen Druckaufnehmer für fluidführende Leitungssysteme. Der Druckaufnehmer weist einen durch einen Körper des Druckaufnehmers verlaufenden Fluidhohlraum auf, welcher einem entlang einer Fluidkanalachse verlaufenden Fluidkanal entspricht. Ein Fluideinlass und ein Fluidauslass dienen jeweils einem Anschlussende zur Verbindung mit Leitungskanälen eines Leitungssystems. Zwischen dem Fluideinlass und dem Fluidauslass ist eine ausgeprägte Oberfläche ausgebildet, auf welcher ein Dehnungsmessstreifen mit Dehnmesssensoren angeordnet ist.

Die US 6,957,588 B1 offenbart einen Druckaufnehmer mit einem Messrohr für fluidführende Leitungssysteme. Zwischen einem ersten und zweiten Rohrflansch, welche als Anschlussenden betrachtet werden können, ist ein zentraler Abschnitt ausgebildet, welcher einem Messabschnitt entspricht und in dem eine Sensorik zur Druckmessung für ein in dem Fluidkanal fließendes Medium angeordnet ist. Als Sensorik sind Dehnungsmessstreifen und Drahtleitungen offenbart.

Die US 2,420,148 A offenbart eine Baueinheit für fluidführende Leitungssysteme, aufweisend einen entlang einer Fluidkanalachse verlaufenden Fluidkanal. Der Fluidkanal ist mittels einer ersten Überwurfmutter und einer zweiten Überwurfmutter mit Leitungskanälen eines Leitungssystems verbindbar. Zwischen den Überwurfmuttern ist ein Rohrabschnitt, welcher als ein Messabschnitt gelesen werden kann, ausgebildet. In diesem Rohrabschnitt ist zudem eine Sensorik, bestehend aus den Messelementen zur Druckmessung für ein in dem Fluidkanal fließendes Medium, angeordnet. In einer Außenwandung des als Messabschnitt ausgebildeten Rohrabschnitts ist eine umfangsgemäß um die Außenwandung des Rohrabschnitts verlaufende Aufnahmenut ausgebildet, in welcher als Dehnungsmessstreifen ausgebildete Messelemente angeordnet sind.

Der Erfindung liegt die Aufgabe zugrunde, einen Verbindungsstutzen zur Verfügung zu stellen, welcher die aus dem Stand der Technik bekannten Probleme löst, insbesondere die Standzeit und Wartungsintervalle optimiert und vorzugsweise die medienbezogene Einsetzbarkeit optimiert, vorteilhaft bei einer Verringerung der Strömungsverluste.

Die Aufgabe wird erfindungsgemäß durch die Merkmale des Verbindungsstutzens gemäß Anspruch 1 gelöst. Die Sensorik zur Druckmessung weist zumindest zwei Dehnungsmesssensoren auf, die am Umfang um die Fluidkanalachse versetzt auf einer Außenwandung des Messabschnitts angeordnet sind.

Hohe Drücke innerhalb des Leitungssystems verursachen bei den beteiligten Komponenten, insbesondere bei dem Verbindungsstutzen, eine geringe Aufweitung im elastischen Bereich. Der Werkstoff des Verbindungsstutzens wird dementsprechend unter Druck in alle Richtungen gelängt. Diese nicht sichtbare Dehnung wird von den auf dem Verbindungsstutzen angeordneten Dehnungsmesssensoren aufgenommen und als physikalische Änderung, insbesondere als Widerstands- bzw. als Spannungsänderung, ausgegeben bzw. an eine Steuereinheit über die Verbindungsschnittstelle weitergeleitet. Der Erfindung liegt dabei die Erkenntnis zugrunde, dass durch das Messen der entstehenden Dehnung bzw. Längenänderung am Verbindungsstutzen und die Interpretation hiervon auf den Druck im Leitungssystem rückgeschlossen werden kann. Die Längenänderungen des Verbindungsstutzens korrelieren dabei direkt mit dem aufgenommenen Druck im Leitungssystem, so dass die als Sensoren für den Druck verwendeten Dehnungsmessstreifen nicht in Kontakt mit einem in dem Leitungssystem geführten Medium gelangen.

Der erfindungsgemäße Verbindungsstutzen ermöglicht zudem eine Messmethode, welche leicht und platzsparend in bestehende Leitungssysteme nachgerüstet werden kann und für nahezu jedes Medium geeignet ist, einzige Voraussetzung ist, dass der Verbindungsstutzen selbst, d. h. sein Werkstoff, für dieses Medium tauglich ist. Das bedeutet, dass die Sensorik auch für aggressive Medien, z. B. Wasserstoff, eingesetzt werden kann, für die es aktuell schwierig bzw. teuer ist, passende Sensoren zu finden.

Vorzugsweise sind die Dehnungsmesssensoren am Umfang um 90° oder 180° um die Fluidkanalachse verteilt angeordnet. Insbesondere sind die Dehnungsmesssensoren entlang der Fluidkanalachse versetzt zueinander angeordnet. Dadurch können äußere Einflüsse, z. B. durch Fremdeinwirkung erzeugte Dehnungen oder Spannungen auf das Leitungssystem, bereits durch die Anordnung und Verschaltung der Dehnungsmesssensoren kompensiert werden. Zweckmäßig ist eine Unterscheidung zwischen einer von außen verursachten Dehnung und einer von innen verursachten Dehnung, welche auf den Druck im Leitungssystem schließen lässt möglich.

Die Dehnungsmesssensoren sind als Dehnungsmessstreifen mit mindestens jeweils einem Dehnmesssensor ausgebildet.

Zweckmäßig weisen die Dehnungsmessstreifen jeweils einen Dehnmesssensor auf einer Trägerfolie auf. Bevorzugt weisen die Dehnungsmessstreifen jeweils zwei Dehnmesssensoren auf einer Trägerfolie auf, wobei der erste Dehnmesssensor eine Längsdehnung in Längsrichtung und der zweite Dehnmesssensor eine Querdehnung in Querrichtung misst. Zweckmäßig sind dabei die zwei Dehnmesssensoren auf der jeweiligen Trägerfolie um 90° zueinander verdreht und in Längsrichtung zur Fluidkanalachse hintereinander angeordnet.

**In** einer vorteilhaften Ausführungsform der Erfindung sind die Dehnmesssensoren der Dehnungsmessstreifen in der Sensorik zu einer Wheatstone'schen Vollbrücke elektrisch geschaltet. Die besondere Schaltungsanordnung hat den Vorteil, dass hierdurch eine Kompensation von Temperatur und Schwingungen stattfindet. Insbesondere weist dabei der Verbindungsstutzen vier aktive Dehnmesssensoren auf.

Vorteilhaft ist zumindest ein Dehnmesssensor in der Sensorik zur Widerstandsabfrage elektrisch geschaltet. Diese Schaltung wird vorzugsweise parallel zu der Schaltung zur Druck- bzw. Dehnungsmessung eingerichtet. Zweckmäßig können auch mehrere Dehnmesssensoren jeweils einzeln in einer Schaltanordnung zur Widerstandsabfrage geschaltet werden, um die Messqualität zu verbessern. Die parallel verlaufende Widerstandsabfrage eines einzelnen Dehnmesssensors ermöglicht Rückschlüsse auf Schwingungen. Hierdurch ergibt sich der Vorteil, dass die Sensorik eine Schwingungserkennung parallel zu der Druckmessung ermöglicht.

Zweckmäßig ist in der Außenwandung des Messabschnitts eine umfangsgemäß um die Außenwandung des Messabschnitts verlaufende, insbesondere vollumfänglich verlaufende Aufnahmenut zur Integration einer elektronischen Schaltung der Sensorik ausgebildet und/oder den Dehnungsmesssensoren ausgebildet. Die Aufnahmenut verbessert den Schutz und reduziert den Bauraum für die Sensorik.

Die Dehnungsmesssensoren sind in jeweils einer in der Außenwandung des Messabschnitts ausgebildeten und parallel zu der Fluidkanalachse verlaufenden Messnut angeordnet. In einer weiteren Ausführung erstreckt sich die Messnut über die gesamte axiale Erstreckung des Messabschnitts entlang der Fluidkanalachse. Durch das Einbringen der beiden Messnuten ist weiterhin vorteilhaft ein höheres Ausmaß der Dehnung im Messabschnitt zu verzeichnen.

Hinsichtlich der Einsatzorte, der äußeren Einflüsse und der daraus resultierenden Standzeit des Verbindungsstutzens weist der Verbindungsstutzen gemäß einer bevorzugten Ausführung zumindest auf einer vom Fluidkanal abweisenden Außenoberfläche eine Beschichtung, insbesondere eine Korrosionsbeschichtung auf. Der Vorteil in Kombination mit den Dehnungsmessstreifen liegt darin, dass die Dehnungsmessstreifen zweckmäßig auf der Beschichtung, insbesondere der Korrosionsbeschichtung, angeordnet sind. Vorteilhaft ist die Korrosionsbeschichtung als eine Zink-Nickel-Schicht ausgebildet. Insbesondere hat die Anordnung der Dehnungsmessstreifen auf der Beschichtung den Vorteil, dass der Verbindungsstutzen leichter gefertigt und beschichtet werden kann und die Sensorik nicht bei der Beschichtung des Verbindungsstutzens beschädigt wird.

Besonders vorteilhaft ist die Verbindungsschnittstelle der Sensorik als eine elektrisch induktive Verbindungsschnittstelle ausgebildet. Über diese Verbindungsschnittstelle ist insbesondre eine elektrische Versorgungsspannung an die Sensorik bzw. die Dehnungsmesstreifen übertragbar. Hierbei kann die induktive Versorgungsspannung mittels einer Klammer übertragen werden, wobei die Klammer dabei den Verbindungsstutzen, insbesondere kraftformschlüssig, umklammert.

Vorzugsweise ist die Verbindungsschnittstelle der Sensorik als eine kabellose bzw. drahtlose Verbindungsschnittstelle ausgebildet, über die Daten von und/oder zu der Sensorik übertragbar sind. Beispielhaft ist die drahtlose bzw. kabellose Verbindungsschnittstelle als eine elektrisch induktive oder Funk- oder Bluetooth- oder WiFi-Verbindungsschnittstelle ausgebildet.

Zweckmäßig ist die elektrisch induktive Verbindungsschnittstelle in der Aufnahmenut angeordnet. In einer vorteilhaften Ausführung sind über die Verbindungsschnittstelle Daten von und/oder zu der Sensorik übertragbar. Besonders vorteilhaft erfolgt sowohl der Spannungseingang als auch der Messsignalausgang über selbige Verbindungsschnittstelle.

Zur Verbindung der Sensorik mit der Steuereinheit mittels einer induktiven Übertragung ist vorzugsweise die Klammer mit der Steuereinheit über ein Kabel verbunden. Die Klammer umgreift die Aufnahmenut und die darin angeordnete Sensorik bzw. die Verbindungsschnittstelle der Sensorik. Die Klammer kann dabei derart ausgebildet sein, dass sie von einem Monteur händisch auf der Verbindungsschnittstelle, insbesondere an der Aufnahmenut, montiert werden kann. Vorzugsweise wird die Klammer im elastischen Bereich, händisch oder mit einem Werkzeug, geweitet und anschließend auf den Verbindungsstutzen mittels der elastischen Rückverformung aufgeclipst, aufgerastet oder aufgeklemmt. Alternativ ist die Klammer plastisch verformbar, insbesondere unter einer Temperaturbeeinflussung, und wird händisch und/oder mit einem Werkzeug an den Verbindungsstutzen angedrückt bzw. angeformt.

Gemäß einer alternativen Ausführung ist eine Spannungsquelle an dem Verbindungsstutzen selbst angeordnet. Mittels der Spannungsquelle ist an die Sensorik die Versorgungspannung anlegbar. Zweckmäßig ist die Spannungsquelle eine Batterie, welche insbesondere in der Aufnahmenut angeordnet ist. Die Spannungsquelle ermöglicht es, auf eine externe Spannungsversorgung zu verzichten. Diese Ausbildung ist insbesondere an abgelegenen oder schwer erreichbaren Einsatzorten vorteilhaft.

Besonders vorteilhaft für schwierige Einsatzorte hat sich eine bevorzugte Ausführung erwiesen, gemäß welcher die Verbindungsschnittstelle der Sensorik als ein Senderelement und/oder Empfängerelement zur Erzeugung eines Funk- oder Bluetooth- oder WiFi-Signals oder zum Empfangen derartiger Signale ausgebildet ist. Insbesondere weist die Steuereinheit ein dementsprechend zum Senderelement bzw. Empfängerelement korrespondierend ausgebildetes und konfiguriertes Senderelement bzw. Empfängerelement auf. Insbesondere kann auf eine kabelgebundene Verbindung zwischen der Sensorik und der Steuereinheit verzichtet werden, was die Vielseitigkeit des Einsatzortes des Verbindungsstutzens und des Abrufortes der Steuereinheit erweitert. Zudem verringert sich die Unfallgefahr und der Montageaufwand durch das Verlegen von gesonderten Leitungen.

Insbesondere ist in diesem Aspekt in einer vorteilhaften Anwendung die Steuereinheit als ein mobiles Gerät ausgebildet, welches direkt oder indirekt mit Empfängerelementen die Messsignale ausgehend von der Verbindungsschnittstelle des Verbindungsstutzens empfängt. Mobile Geräte sind insbesondere Mobiltelefone, Tablets, tragbare Computer und dergleichen. Eine direkte Verbindung ist insbesondere eine Verbindung, beispielsweise über Bluetooth, bei der Steuereinheit und Sensorik unmittelbar miteinander kommunizieren. Eine indirekte Verbindung ist insbesondere eine Verbindung, bei der ein Gerät, z. B. ein Netzwerkgerät, zwischengeschaltet ist, um z. B. das Messsignal über eine WiFi basierende Verbindung einem Netzwerk zur Verfügung zu stellen. Insbesondere ermöglicht eine indirekte Verbindung sowohl einen geschützten und auf ein Netzwerk beschränkten Zugriff auf die Messsignale, als auch einen Fernzugriff auf die Messsignale über das Internet.

Es ist eine Steuereinheit zum Verbinden mit der vorgenannten Sensorik zur Druckmessung eines Fluiddrucks des Verbindungsstutzens vorhanden.

Die Steuereinheit weist Verbindungsmittel zum datentechnischen Verbinden mit der Sensorik des Verbindungsstutzens und Berechnungsmittel zur Berechnung des Fluiddrucks in dem Verbindungsstutzen anhand von empfangenen Daten und anhand von in der Steuereinheit abgespeicherten leitungs- und/oder mediumsspezifischen Parametern auf.

Besonders vorteilhaft ermöglicht die Erfindung neben der reinen Druckmessung und optional der Schwingungsmessung auch vorzugsweise eine Temperaturbestimmung eines sich in dem Fluidkanal befindlichen Mediums. Vorteilhaft sind Berechnungsmittel der Steuereinheit zur Berechnung einer Temperatur eines in dem Fluidkanal befindlichen Mediums anhand der Messdaten und der Parameter ausgebildet. Zweckmäßig wird ein Referenzpunkt zur Ausgangslage bei bekannter Temperatur, zumindest des Mediums, und bekannter Dehnung im Messabschnitt ermittelt, von dem aus über die relative Dehnung und unter Einbeziehung leitungs- und/oder mediumspezifischer Parameter Rückschlüsse auf die Temperatur des Mediums möglich sind.

Weitere vorteilhafte Ausgestaltungen der Erfindung ergeben sich aus der folgenden Figurenbeschreibung und den abhängigen Unteransprüchen.

Es zeigen:
- Fig. 1: eine perspektivische Ansicht einer ersten Ausführung eines Verbindungsstutzens,
- Fig. 2: eine Aufsicht auf den Verbindungsstutzen gemäß Figur 1 in axiale Richtung einer Fluidachse gemäß Figur 1,
- Fig. 3: eine schematische Darstellung einer Trägerfolie mit zwei Dehnungsmesstreifen,
- Fig. 4: einen Längsschnitt entlang der Fluidachse X gemäß Figur 1,
- Fig. 5: eine perspektivische Ansicht einer zweiten Ausführung eines Verbindungsstutzens mit einer vergossenen Mess- und Aufnahmenut,
- Fig. 6: eine perspektivische Ansicht einer dritten Ausführung eines Verbindungsstutzens mit einer teilweise vergossenen Mess- und Aufnahmenut,
- Fig. 7 und 8: einen perspektivisch dargestellten Verbindungsablauf der dritten Ausführung eines Verbindungsstutzens gemäß Figur 6 mit einer Steuereinheit,
- Fig. 9: eine perspektivische Ansicht einer vierten Ausführung eines beispielhaften, nicht erfindungsgemäßen Verbindungsstutzens mit einer Aufnahmenut und
- Fig. 10: eine perspektivische Ansicht einer fünften Ausführung eines beispielhaften, nicht erfindungsgemäßen Verbindungsstutzens mit einer teilweise vergossenen Aufnahmenut.

**In** den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

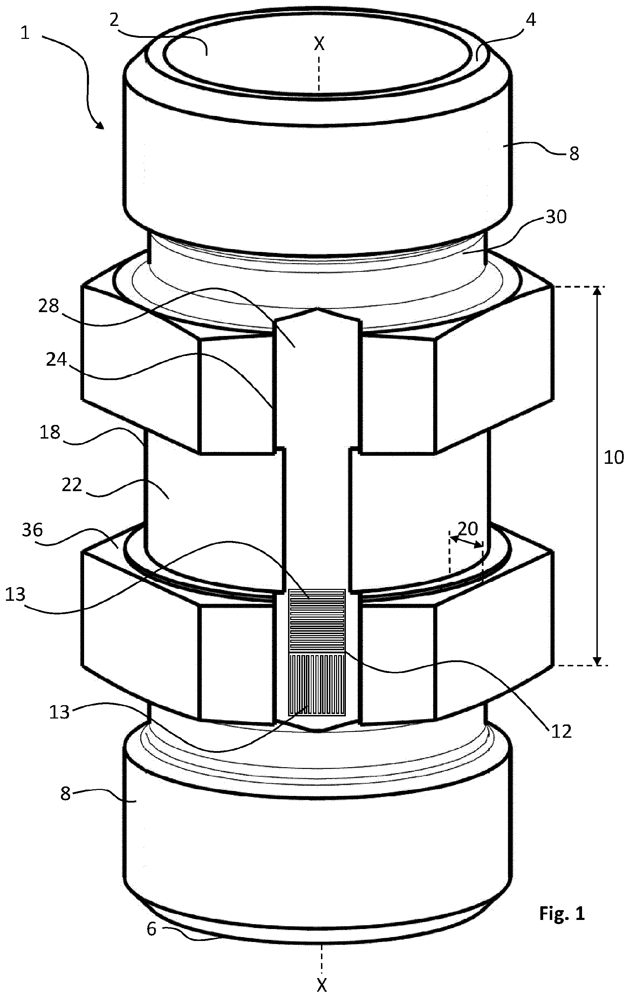

**In** den Figuren 1, 5, 6, 9 und 10 ist jeweils ein Verbindungsstutzen 1 für fluidführende Leitungssysteme dargestellt. Dieser Verbindungsstutzen 1 weist einen entlang einer Fluidachse X verlaufenden Fluidkanal 2 auf, wobei der Fluidkanal 2 an zumindest einem ersten Anschlussende 4 und einem zweiten Anschlussende 6 des Verbindungsstutzens 1 mit Leitungskanälen des Leitungssystems verbindbar ist. Die Leitungskanäle des Leitungssystems sind in den Figuren nicht dargestellt.

Die Anschlussenden 4, 6 des Verbindungsstutzens 1 können dabei derart ausgestaltet sein, dass der Verbindungsstutzen 1 mit einer Rohrleitung oder einem Aggregat verbunden werden kann. Insbesondere weist zumindest ein Anschlussende 4, 6 ein von dem Fluidkanal 2 nach außen weisendes Außengewinde 8 zur Montage einer Rohrleitung oder zum Einschrauben in ein Aggregat auf. Alternativ weist zumindest ein Anschlussende 4, 6 ein zum Fluidkanal 2 weisendes Innengewinde zum Einschrauben eines Adapterelements eines Aggregats oder zum Einschrauben einer Rohrleitung auf. Vorteilhaft ist zumindest ein Anschlussende 4, 6 als Dorn und/oder als Muffe und/oder als Stecker ausgebildet. Zweckmäßig ist zumindest ein Anschlussende 4, 6 mit einem Aggregat oder einer Rohrleitung stoffschlüssig verbunden, insbesondere verschweißt, verlötet oder verklebt. Gemäß einer besonders bevorzugten Ausführung ist an beiden Anschlussenden 4, 6 ein Außengewinde 8 zur Verschraubung mit einer Rohrleitung oder einem Aggregat ausgebildet, wie in den Figuren 1 und 5 bis 10 schematisch dargestellt.

Zwischen dem ersten Anschlussende 4 und dem zweiten Anschlussende 6 ist, entsprechend der Darstellung in Figur 1, ein Messabschnitt 10 ausgebildet. **In** diesem Messabschnitt 10 ist eine Sensorik zur Druckmessung für ein in dem Fluidkanal fließendes Medium angeordnet. Die Sensorik weist dabei eine Verbindungsschnittstelle auf, mit der sie mit einer Steuereinheit zur Druckmessung im Fluidkanal 2 verbindbar ist. **In** der Figur 1 sind zur Vereinfachung die Verbindungsschnittstelle und die Steuereinheit nicht dargestellt.

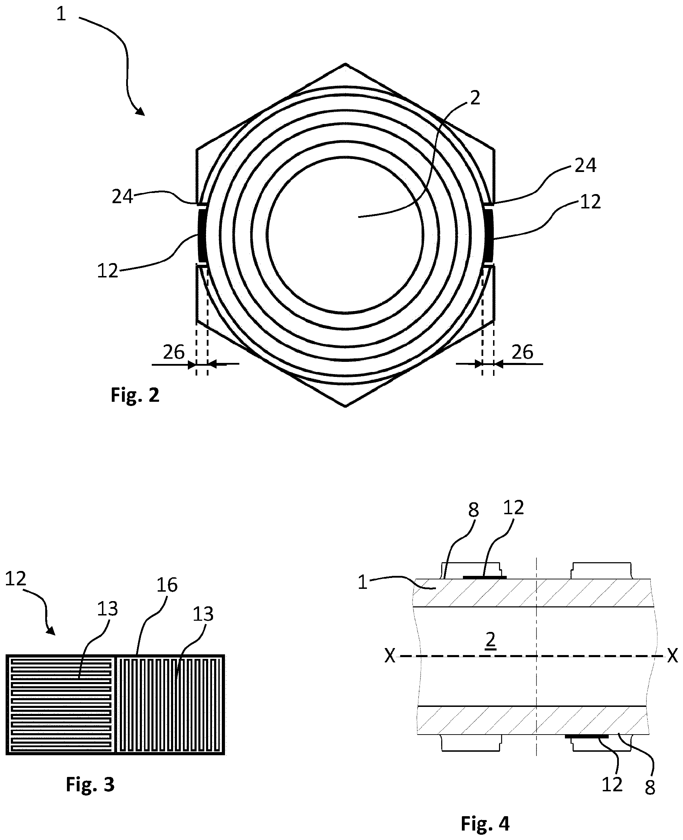

Erfindungsgemäß weist die Sensorik zur Druckmessung zumindest zwei Dehnungsmesssensoren auf. Dabei sind die Dehnungsmesssensoren, wie in Figur 2 dargestellt, am Umfang um die Fluidkanalachse X versetzt auf einer Außenwandung 14 des Messabschnitts 10 angeordnet.

Der in Figur 2 dargestellte Verbindungsstutzen 1 entspricht einer bevorzugten Ausführungsform, gemäß welcher die Dehnungsmesssensoren am Umfang um 180° um die Fluidkanalachse X versetzt angeordnet sind. Gemäß einer weiteren, nicht dargestellten, Ausführung sind die Dehnungsmesssensoren am Umfang um 90° um die Fluidkanalachse X versetzt angeordnet.

Besonders bevorzugt sind die Dehnungsmesssensoren gemäß der in Figur 4 dargestellten Ausführung entlang der Fluidkanalachse X versetzt zueinander angeordnet.

Die Dehnungsmesssensoren nehmen, insbesondere für das menschliche Auge nicht sichtbare, Dehnungen im Messabschnitt 10 auf und geben diese als Messsignale, insbesondere in Form von Widerstands- bzw. als Spannungsänderung aus.

Durch das Messen der entstehenden Dehnung bzw. Längenänderung am Verbindungsstutzen 1 und die Interpretation der Messsignale, insbesondere mittels der Steuereinheit, ist es möglich, den Druck im Leitungssystem zu bestimmen. Die Längenänderungen des Verbindungsstutzens 1 korrelieren dabei direkt mit dem aufgenommenen Druck im Leitungssystem. Entsprechend der Anordnung der Dehnungsmessstreifen 12 in Figur 1 sind die als Sensoren für die Druckmessung verwendeten Dehnungsmesssensoren nicht in Kontakt mit einem in dem Leitungssystem geführten Medium. Insbesondere ist dadurch der erfindungsgemäße Verbindungsstutzen 1 für nahezu jedes Medium im Leitungssystem geeignet, einzige Voraussetzung ist, dass der Verbindungsstutzen 1 selbst, d. h. sein Werkstoff, für dieses Medium tauglich ist. Das bedeutet, dass die Sensorik auch für aggressive Medien, z. B. Wasserstoff, eingesetzt werden kann, für welche es nur wenige bzw. teurere passende Drucksensoren gibt.

Wie in den Figuren 1, 5 und 6 dargestellt, ist die Sensorik mit einem erfindungsgemäßen Verbindungsstutzen 1 platzsparend und leicht in bestehende Leitungssysteme nachrüstbar.

Insbesondere durch die, wie in den Figuren 2 und 4 dargestellte, um 180° um die Fluidkanalachse X versetzte Anordnung der Dehnungsmesssensoren auf dem Verbindungsstutzen 1 können von außen aufgebrachte Einflüsse, z. B. Dehnungen oder Verspannungen durch Montagekräfte, bereits durch die Anordnung und Verschaltung der Dehnungsmesssensoren kompensiert werden. Zweckmäßig kann eine Unterscheidung zwischen einer von außen verursachten Dehnung und einer von innen verursachten Dehnung, welche auf den Druck im Leitungssystem schließen lässt, getroffen werden.

Die Dehnungsmesssensoren sind als Dehnungsmessstreifen 12, wie in den Figuren 1 und 3 schematisch dargestellt, mit jeweils mindestens einem Dehnmesssensor 13 ausgebildet.

Insbesondere erstrecken sich die Dehnungsmessstreifen 12, wie in Figur 1 dargestellt, in ihrer Längsrichtung entlang der Fluidkanalachse X verlaufend.

Vorteilhaft ist zumindest ein Dehnmesssensor 13 auf einer Trägerfolie 16 angeordnet. Vorzugsweise weisen die Dehnungsmessstreifen 12, wie in Figur 1 und 3 dargestellt, jeweils zwei Dehnmesssensoren 13 auf einer Trägerfolie 16 auf. Insbesondere misst der erste Dehnmesssensor 13 eine Dehnung in Längsrichtung und der zweite Dehnmesssensor 13 eine Dehnung in Querrichtung. Besonders bevorzugt ist die Trägerfolie 16 mit dem Verbindungsstutzen 1 stoffschlüssig verbunden. Zweckmäßig sind die Dehnmesssensoren 13, wie in Figur 1 und 3 dargestellt, mit der Trägerfolie 16 stoffschlüssig verbunden.

Der in Figur 1 dargestellte Verbindungsstutzen 1 entspricht einer bevorzugten Ausführungsform mit zwei Dehnungsmessstreifen 12 und vier Dehnmesssensoren 13, wobei jeweils zwei Dehnmesssensoren 13, wie in Figur 3 dargestellt, benachbart auf einer gemeinsamen Trägerfolie 16 angeordnet sind.

In einer vorteilhaften Ausführungsform der Erfindung sind die Dehnmesssensoren 13 in der Sensorik zu einer Wheatstone'schen Vollbrücke elektrisch geschaltet. Da die Schaltung zur Wheatstone'schen Vollbrücke an sich bekannt ist, ist für eine bessere Übersicht auf eine bildliche Darstellung in den Figuren verzichtet. Insbesondere weist dabei der Verbindungsstutzen 1 vier aktive Dehnmesssensoren 13 auf, vorzugsweise jeweils zwei Dehnmesssensoren 13 auf einer Trägerfolie 16, wobei jeweils ein Dehnmesssensor 13 jeder Trägerfolie 16 eine Längsdehnung entlang der Fluidkanalachse X misst und jeweils ein Dehnungsmessstreifen 12 eine Quer- bzw. Umfangsdehnung des Verbindungsstutzens 1 misst. Beispielhaft weist die in Figur 1 dargestellte Ausführung des Verbindungsstutzens 1 zumindest einen derartigen Dehnungsmessstreifen 12 auf. Die Ausführung eines Dehnungsmessstreifens 12 mit einer Trägerfolie 16 und zwei Dehnmesssensoren 13 ist schematisch in der Figur 3 dargestellt. Zweckmäßig sind dabei die zwei Dehnmesssensoren 13 auf der Trägerfolie 16, wie in Figur 3 dargestellt, um 90° zueinander verdreht und in Längsrichtung zur Fluidkanalachse X hintereinander angeordnet.

Vorteilhaft ermöglicht die Verschaltung zu einer Wheatstone'schen Vollbrücke, dass Biegung, Schwingung und Temperatureinflüsse in der Messung kompensiert werden und eine Normaldehnung, d. h. axial zur Fluidkanalachse X, unabhängig von einer Biegedehnung gemessen werden kann. Ein weiterer Vorteil ist, dass die Verschaltung zur Wheatstone'schen Vollbrücke ein hohes Ausgangssignal bzw. Messsignal und eine ausgezeichnete Gleichtaktunterdrückung (CMR) generiert.

Vorteilhaft ist zumindest ein einzelner Dehnungsmesssensor 13 in der Sensorik zur Widerstandsabfrage elektrisch geschaltet. Entsprechend der Schaltung zur Wheatstone'schen Vollbrücke wird auf eine bildliche Darstellung der Schaltanordnung zur Widerstandsabfrage des einzelnen Dehnungsmessstreifens 12 verzichtet. Diese Schaltung wird vorzugsweise parallel zu der Schaltung zur Druck- bzw. Dehnungsmessung, insbesondere parallel zur Wheatstone'schen Vollbrückenschaltung eingerichtet. Zweckmäßig können auch mehrere Dehnmesssensoren13 jeweils einzeln in der Sensorik zur Widerstandsabfrage geschaltet werden, um die Messqualität mittels eines Datenvergleichs, z. B. einer Mittelwertbildung, zu verbessern. Die parallel verlaufende Widerstandsabfrage eines einzelnen Dehnmesssensors 13 ermöglicht die Messung von Schwingungen im Verbindungsstutzen 1.

Insbesondere sind die Dehnungsmessstreifen 12 hochsensible Dehnungsmessstreifen 12, welche vorteilhaft die Dehnung zumindest mit einer Genauigkeit von 10⁻⁴ mm an die Steuereinheit ausgeben können.

Gemäß einer Ausführung sind die Dehnungsmessstreifen 12 als Folien-Dehnungsmessstreifen ausgebildet. Vorzugsweise wird dabei ein piezo-resistiver Dehnmessstreifen, typischerweise ein Widerstandsdraht, auf einer Trägerfolie 16 aufgebracht. Die Folie dient vorteilhaft als Mittel, um eine Montage, insbesondere ein Aufkleben, auf dem Verbindungsstutzen 1 zu ermöglichen.

Gemäß einer anderen Ausführung sind die Dehnungsmessstreifen 12 als Silizium-Dehnungsmessstreifen ausgebildet. Vorteilhaft bietet der Silizium-Dehnungsmessstreifen eine sehr hohe Sensitivität bei gleichzeitig geringer Größe. Vorzugsweise wird der Silizium-Dehnungsmessstreifen durch eine Klebung oder ein Glaslotverfahren auf dem Verbindungsstutzen 1 montiert. Zweckmäßig ist durch die Option einer Aufglasung ein alternatives, potenziell günstigeres Montageverfahren zur Verfügung gestellt.

Zweckmäßig ist der Dehnungsmessstreifen 12, insbesondere der Silizium-Dehnungsmessstreifen 12, an dem Verbindungsstutzen 1 durch eine Kombination von Klebung und Glaslotverfahren montiert. Bevorzugt wird der Silizium-Dehnungsmessstreifen 12 zuerst auf die Trägerfolie 16 aufgeglast. Diese Trägerfolie 16 wird anschließend auf den Verbindungsstutzen 1 geklebt. Diese Kombination der stoffschlüssigen Verbindungen hat den Vorteil, dass durch die Vergrößerung der Fläche, welche durch die Trägerfolie 16 entsteht, Kriecheffekte gegenüber der direkten Klebung eines Silizium- Dehnungsmessstreifens reduziert werden können. Gleichzeitig kann eine einfache Montage mittels Klebung auf den Verbindungsstutzen 1 durchgeführt werden. Hierdurch wird der komplexe Prozess des direkten Aufglasens vereinfacht. Beim direkten Aufglasen auf ein Bauteil wird das gesamte Bauteil erhitzt und kühlt kontinuierlich mit dem flüssigen Glaslot ab, so dass keine Spannungsrisse entstehen. Das Aufglasen auf eine Trägerfolie 16 hingegen kann prozesssicher und unabhängig vom Bauteil, insbesondere unabhängig vom Verbindungsstutzen 1, durchgeführt werden.

Gemäß einer weiteren Ausführung sind die Dehnungsmessstreifen 12 als Dünnfilm-Dehnungsmessstreifen ausgebildet. Ähnlich dem Folien-Dehnungsmessstreifen handelt es sich beim Dünnfilm-Dehnungsmessstreifen vorteilhaft um eine Technologie, bei der ein piezo-resistiver Dehnungsmessstreifen auf einer Trägerfolie 16 aufgebracht ist. Vorteilhaft wird der Dünnfilm-Dehnungsmessstreifen in einem Dünnfilm-Druckverfahren erzeugt.

Gemäß einer anderen Ausführung sind die Dehnungsmessstreifen 12 als Dickfilm-Dehnungsmessstreifen ausgebildet. Vorteilhaft ist eine piezo-resistive Paste, die in einem Druckverfahren direkt auf dem Verbindungsstutzen 1 aufgebracht wird.

Alternativ zu dem Dehnungsmessstreifen 12 sind die Dehnungsmesssensoren als piezokeramische Sensoren ausgebildet. Vorteilhaft erzeugen die piezokeramischen Sensoren eine elektrische Spannung, sobald ein mechanischer Druck auf den Verbindungsstutzen 1 ausgeübt wird. Die erzeugte Spannung kann dann als Messsignal ausgewertet werden.

Gemäß einer weiteren Alternative zu den Dehnungsmessstreifen 12 und dem piezokeramischen Sensor kann ein kapazitives Messverfahren verwendet werden. Insbesondere stellt eine Ausdehnung des Verbindungsstutzens 1 eine Verschiebung einer Platte eines Kondensators zu einer feststehenden Platte dar. Durch die Abstandsänderung ergibt sich zweckmäßig eine Veränderung in der Kapazität. Die Kapazitätsänderung wiederum kann als Messsignal ausgewertet werden.

**In** einer weiteren Alternative zu den vorgenannten Dehnungsmesssensoren wird ein induktives Messverfahren angewandt. Zur Erkennung der Ausdehnung des Verbindungsstutzens wird die Änderung des Abstands zu einer Messinduktivität erfasst. Die Messinduktivität wird vorzugsweise über eine Wechselspannung angeregt. Die sich verändernde Messinduktivität durch die Abstandsänderung wird zweckmäßig von einer nachgeschalteten Elektronik erfasst.

Die Dehnungsmesssensoren sind in jeweils einer Messnut 24 angeordnet. Diese Messnut 24 ist in der Außenwandung 14 des Messabschnitts 10 ausgebildet und verläuft parallel zu der Fluidkanalachse X. **In** den Figuren 1, 2 und 4 bis 8 sind die Messnuten 24 derart ausgebildet, dass sich die Messnuten 24 des Verbindungsstutzens 1 über die gesamte axiale Erstreckung des Messabschnitts 10 erstrecken. Zweckmäßig kann auch mehr als ein Dehnungsmesssensor, gemäß einem nicht dargestellten Beispiel, in einer gemeinsamen Messnut 24 angeordnet sein. Besonders vorteilhaft sind die Messnuten 24 zur Fluidkanalachse X symmetrisch ausgebildet. Die Messnuten 24 weisen einen planen, parallel zur Fluidkanalachse X verlaufenden Messnutgrund 28 auf. Durch das Einbringen der beiden Messnuten 24 ist weiterhin vorteilhaft ein höheres Ausmaß der Dehnung im Messabschnitt 10 durch den Materialabtrag des Verbindungsstutzens 1 zu verzeichnen.

Wie in der Figur 2 dargestellt ist, weist die Messnut 24 eine radial zur Fluidkanalachse X ausgeprägte Messnuttiefe 26 zu dem Messnutgrund 28 auf, wobei zwischen dem Messnutgrund 28 und dem Fluidkanal 2 eine Wandung des Verbindungsstutzens 1 mit einer Restwandstärke verbleibt. Zweckmäßig entspricht die Messnuttiefe 26 des Messnutgrundes 28 der Messnuten 24 maximal dem minimalen Außenumfang des Verbindungsstutzen 1 außerhalb des Messabschnitts 10.

Die Messnuttiefe 26 und die Restwandstärke der Wandung sind derart ausgebildet, dass zumindest der in einem funktionsfähigen Leitungssystem maximal auftretende Innendruck nicht zu einer plastischen Verformung des Verbindungsstutzens 1 führt.

Insbesondere die Messnuttiefe 26 und die Restwandstärke des Verbindungsstutzens 1 sind dabei an den Innendruck im Fluidkanal 2 derart angepasst ausgebildet, dass der Verbindungsstutzen 1 mit vorzugsweise einem maximalen Innendruck im Fluidkanal 2 von insbesondere 3200 bar, zweckmäßig über 3200 bar, belastet werden kann, ohne dass dieser plastisch verformt wird. Vorteilhaft sind die Messnuttiefe 26 und die Restwandstärke derart an den Innendruck im Fluidkanal 2 angepasst ausgebildet, dass der Verbindungsstutzen 1 mit einem Sicherheitsdruck belastet werden kann, ohne dass dieser plastisch verformt wird. Der Sicherheitsdruck wird insbesondere gebildet, indem der maximale Innendruck im Fluidkanal 2 mit einem Sicherheitsfaktor multipliziert wird. Der Sicherheitsfaktor beträgt insbesondere 1,5 bis 6,5, vorzugsweise 2 bis 6, bevorzugt 3 bis 5 und besonders bevorzugt 4.

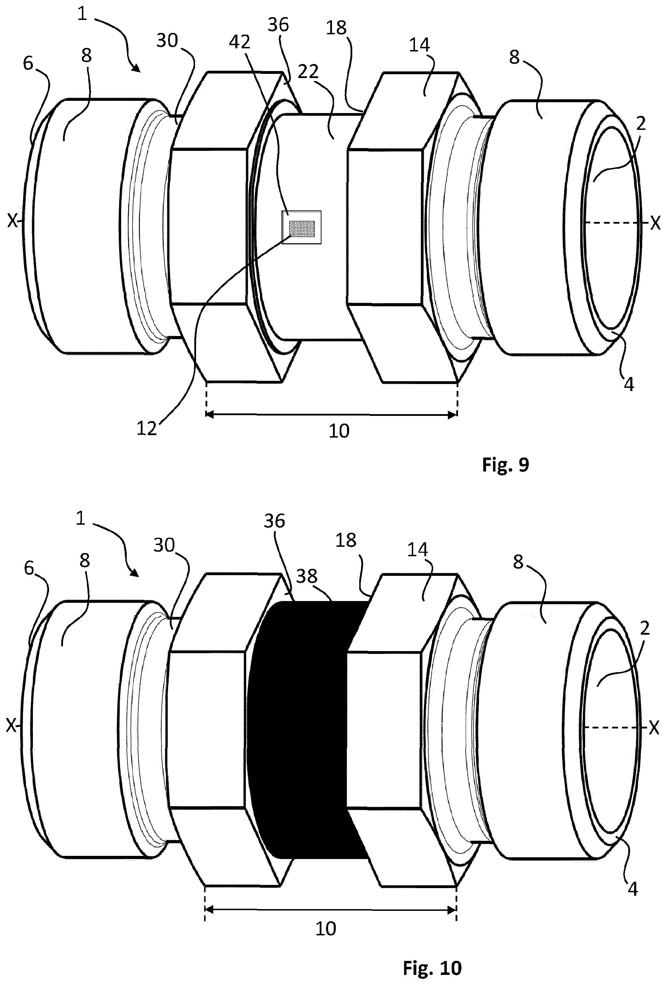

Wie in den Figuren 1, 6, 7, 9 und 10 dargestellt, ist in der Außenwandung 14 des Messabschnitts 10 eine umfangsgemäß um die Außenwandung 14 des Messabschnitts 10 verlaufende Aufnahmenut 18 ausgebildet. Diese umlaufende Aufnahmenut 18 dient zweckmäßig zur Integration einer elektrischen Schaltung der Sensorik und/oder insbesondere der Verbindungsschnittstelle der Sensorik für die Dehnungsmesssensoren und/oder zur Integration der Dehnungsmesssensoren. Exemplarisch sind die Dehnungsmesssensoren in den Figuren 9 und 10 in der umlaufenden Aufnahmenut 18 integriert. Durch die Aufnahmenut 18 in dem Verbindungsstutzen 1 wird dabei eine ungeordnete Anordnung der Sensorik an dem Verbindungsstutzen 1 vermieden. Die Sensorik ist dabei in den Figuren 1, 6, 7, 9 und 10 nicht dargestellt. Insbesondere kann die Schaltung elektrische Leiter und/oder Platinen und/oder Spannungsquellen und/oder andere elektrische Schaltungselemente umfassen. Die Verbindungsschnittstelle ist insbesondere als ein Sender und/oder ein Empfänger und/oder ein Stecker und/oder eine Buchse und/oder ein Verbindungskabel ausgebildet. Die Anordnung der Dehnungsmesssensoren in der Aufnahmenut 18 hat einerseits fertigungstechnische Vorteile, da die umlaufende Aufnahmenut 18 einfacher zu fertigen ist, und andererseits den Vorteil, dass Beschädigungen durch ein Montagewerkzeug bspw. ein Gabelschlüssel, vermieden werden.

Besonders vorteilhaft sind die Dehnungsmesssensoren jeweils in einer Abflachung 42 in der Aufnahmenut 18, wie in Figur 9 dargestellt, oder der Messnut 24 bzw. in einem Übergangsbereich zwischen Messnut 24 und Aufnahmenut 18 angeordnet. Die Abflachung 42 bietet dabei zusätzlichen Schutz. Die Abflachung 42 ist insbesondere in einer umlaufenden Aufnahmenut 18 leichter zu fertigen als in der axialen Messnut 24.

Wie in den Figuren 1 und 5 bis 10 dargestellt, ist die Aufnahmenut 18 vorzugsweise in der Mitte des Verbindungsstutzens 1 angeordnet. Die Aufnahmenut 18 weist dabei vorzugsweise eine radial zur Fluidkanalachse X ausgeprägte Aufnahmenuttiefe 20 zu einem Aufnahmenutgrund 22 auf, wobei zwischen dem Aufnahmenutgrund 22 und dem Fluidkanal 2 eine Wandung des Verbindungsstutzens 1 mit einer Restwandstärke verbleibt. Die Aufnahmenuttiefe 20 und die Restwandstärke der Wandung sind derart ausgebildet, dass zumindest der in einem funktionsfähigen Leitungssystem maximal auftretende Innendruck nicht zu einer plastischen Verformung des Verbindungsstutzens 1 führt. Insbesondere werden die Aufnahmenuttiefe 20 und die Restwandstärke des Verbindungsstutzens 1 nach den gleichen Anforderungen hinsichtlich der Druckauslegung ausgebildet wie bei der Messnut 24 hinsichtlich der Messnuttiefe 26 und der Restwandstärke des Verbindungsstutzens 1.

Sowohl die Aufnahmenut 18 als auch die Messnut 24 haben insbesondere jeweils eine schützende Wirkung für die Sensorik, insbesondere für die Dehnungsmesssensoren und/oder die elektrische Schaltung und/oder die Verbindungsschnittstelle.

Der Verbindungsstutzen 1 hat eine von dem Fluidkanal 2 abweisende Außenoberfläche 30 ausgebildet. Diese Außenoberfläche 30 weist vorzugsweise eine Beschichtung, insbesondere eine Korrosionsbeschichtung auf. Diese Beschichtung hat insbesondere den Vorteil, dass der Verbindungsstutzen 1 resistenter gegen äußere Einflüsse ist und sich die Standzeit des Verbindungsstutzens 1 verbessert

Besonders vorteilhaft sind die Dehnungsmessstreifen 12 zweckmäßig auf der Beschichtung, insbesondere der Korrosionsbeschichtung, angeordnet. Besonders bevorzugt ist die Korrosionsbeschichtung als eine Zink-Nickel-Schicht ausgebildet. Zweckmäßig wird die Zink-Nickel-Schicht mit einer transparenten oder schwarzen Passivierung verwendet. Insbesondere ist die Passivierung eine auf der Zink-Nickel-Schicht erzeugte anorganische Umwandlungsschicht, die durch ein Eintauchen in eine Lösung aus hierfür geeigneten Chemikalien erzeugt wird. Dabei ist die Lösung vorteilhaft eine dreiwertige Chromverbindung. Insbesondere hat die Anordnung der Dehnungsmessstreifen 12 auf der Beschichtung den Vorteil, dass der Verbindungsstutzen 1 leichter gefertigt und beschichtet werden kann und die Dehnungsmessstreifen 12 nicht bei der Beschichtung des Verbindungsstutzens 1 beschädigt werden.

Gemäß einer vorteilhaften, nicht dargestellten Ausführung ist eine Spannungsquelle an dem Verbindungsstutzen 1 selbst angeordnet. Mittels der Spannungsquelle ist an die Sensorik eine Versorgungspannung anlegbar. Zweckmäßig ist die Spannungsquelle eine Batterie und insbesondere in der Aufnahmenut 18 angeordnet. Die Spannungsquelle ermöglicht es, auf eine externe Spannungsversorgung zu verzichten und erhöht die Unabhängigkeit des Verbindungsstutzens 1, insbesondere in Kombination mit einer kabellosen bzw. drahtlosen Datenübertragung. Diese Ausbildung ist insbesondere an abgelegenen oder schwer erreichbaren Einsatzorten vorteilhaft.

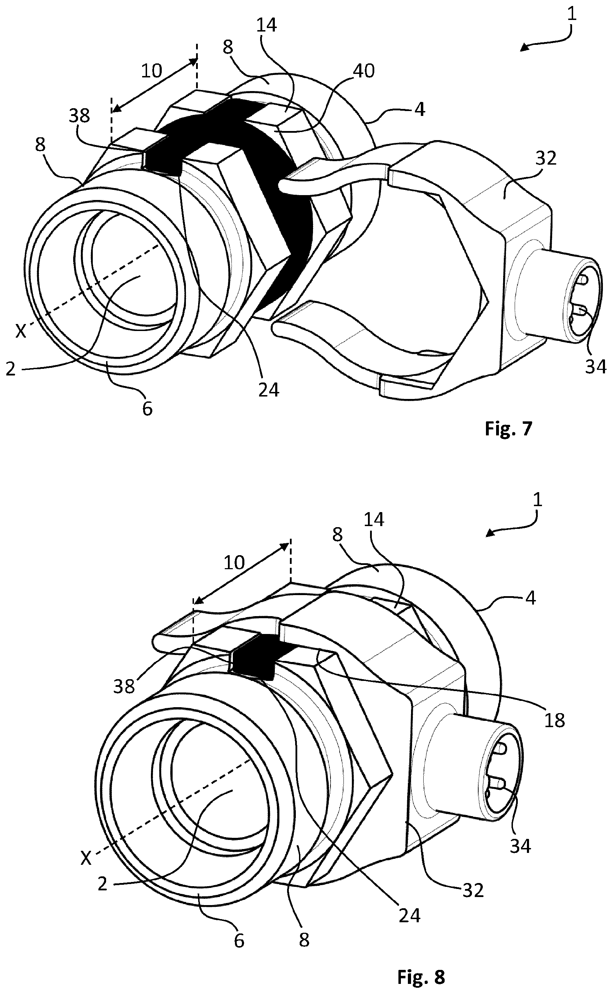

Besonders vorteilhaft ist die Verbindungsschnittstelle der Sensorik als eine elektrisch induktive Verbindungsschnittstelle ausgebildet. Über die Verbindungsschnittstelle ist insbesondere eine elektrische Versorgungsspannung, wie in Figur 8 dargestellt, an die Sensorik übertragbar. Hierbei kann die Versorgungsspannung elektrisch induktiv mittels einer in den Figuren 7 und 8 dargestellten Klammer 32 übertragen werden.

Entsprechend Figur 8 wird die Klammer 32 insbesondere kraftformschlüssig im Messabschnitt 10, insbesondere in der Aufnahmenut 18 angeordnet.

Zweckmäßig ist die Verbindungsschnittstelle der Sensorik als eine kabellose bzw. drahtlose Verbindungsschnittstelle ausgebildet, über die Daten von und/oder zu der Sensorik übertragbar sind. Exemplarisch kann eine drahtlose bzw. kabellose Verbindungsschnittstelle als eine elektrisch induktive oder Funk- oder Bluetooth- oder WiFi-Verbindungsschnittstelle ausgebildet sein.

Insbesondere in der in Figur 8 dargestellten Ausführungsform ist
die Sensorik mit der Steuereinheit mittels einer elektrisch induktiven Verbindungsschnittstelle verbunden. Insbesondere ist die Steuereinheit mit einem Kabel mit der Klammer 32 verbunden, in den Figuren 7 und 8 ist an der Klammer 32 lediglich ein Stecker 34 zur Verbindung mit dem Kabel dargestellt. Vorzugsweise umgreift die kabelgebundene Klammer 32, wie in Figur 8 dargestellt, die Aufnahmenut 18 und die darin angeordnete Verbindungsschnittstelle. Insbesondere verhindern in axiale Richtung zur Fluidkanalachse X weisende Seitenwände 36 der Aufnahmenut 18, dass sich die Klammer 32 axial verschiebt.

In einer vorteilhaften Ausführung ist die Verbindungsschnittstelle der Sensorik als eine elektrisch induktive Verbindungsschnittstelle ausgebildet, über die Daten von und/oder zu der Sensorik übertragbar sind. Insbesondere werden induktiv sowohl eine Versorgungsspannung ausgehend von der Steuereinheit an die Sensorik übertragen, als auch vorzugsweise das Messsignal, die als Widerstands- bzw. als Spannungsänderung ausgegebene Dehnung, an die Steuereinheit übermittelt. Besonders vorteilhaft erfolgen sowohl der Spannungseingang als auch der Messsignalausgang über selbige, insbesondere wie in Figur 8 von einer Klammer 32 umklammerte, Verbindungsschnittstelle.

Die Klammer 32 ist vorzugsweise derart ausgebildet, dass sie von einem Monteur händisch auf der Verbindungsschnittstelle, insbesondere an der Aufnahmenut 18 montiert werden kann. Vorzugsweise wird die Klammer 32 im elastischen Bereich, händisch oder mit einem Werkzeug, geweitet und anschließend auf den Verbindungsstutzen 1 mittels der elastischen Rückverformung aufgeclipst, aufgerastet oder aufgeklemmt. Alternativ ist die Klammer 32 plastisch verformbar, insbesondere unter einer Temperaturbeeinflussung, und wird händisch und/oder mit einem Werkzeug an den Verbindungsstutzen 1 angedrückt bzw. angeformt. Zweckmäßig ist die Klammer 32 mit einer kraftformschlüssigen Anordnung an dem Verbindungsstutzen 1 angeordnet.

Um die Einsatzmöglichkeiten des Verbindungsstutzens 1 zu verbessern, ist die Verbindungsschnittstelle der Sensorik in einer nicht dargestellten vorteilhaften Ausführung als ein Senderelement und/oder ein Empfängerelement zur Erzeugung und/oder zum Empfangen eines Funk- oder Bluetooth- oder WiFi-Signals ausgebildet. Dabei weist die Steuereinheit dementsprechend ein zum Senderelement und/oder Empfängerelement korrespondierend ausgebildetes und konfiguriertes Senderelement und/oder Empfängerelement auf. Insbesondere kann auf eine kabelgebundene Verbindung von der Steuereinheit zu der Sensorik verzichtet werden, was die Vielseitigkeit des Einsatzortes des Verbindungsstutzens 1 und des Abrufortes der Steuereinheit erweitert. Zudem verringert sich die Unfallgefahr und der Montageaufwand durch das Verlegen von gesonderten elektrischen Leitungen. Besonders vorteilhaft weist in diesem Sinne der Verbindungsstutzen 1 sowohl ein Senderelement und/oder Empfängerelement als auch eine an dem Verbindungsstutzen 1 angeordnete Spannungsquelle auf.

Besonders vorteilhaft ist die Steuereinheit ein mobiles Gerät, welches direkt oder indirekt mit Empfängerelementen die Messsignale ausgehend von der Verbindungsschnittstelle des Verbindungsstutzens 1 empfängt. Mobile Geräte sind insbesondere Mobiltelefone, Tablets, tragbare Computer und dergleichen. Eine direkte Verbindung ist insbesondere eine Verbindung, beispielsweise über Bluetooth, bei der die Steuereinheit und die Sensorik unmittelbar miteinander kommunizieren. Eine indirekte Verbindung ist insbesondere eine Verbindung, bei der ein Gerät, z. B. ein Netzwerkgerät, zwischengeschaltet ist, um z. B. das Messsignal über eine WiFi basierende Verbindung einem Netzwerk zur Verfügung zu stellen.

Insbesondere ermöglicht eine indirekte Verbindung sowohl einen geschützten und auf ein Netzwerk beschränkten Zugriff auf die Messsignale, als auch einen Fernzugriff auf die Messsignale über das Internet.

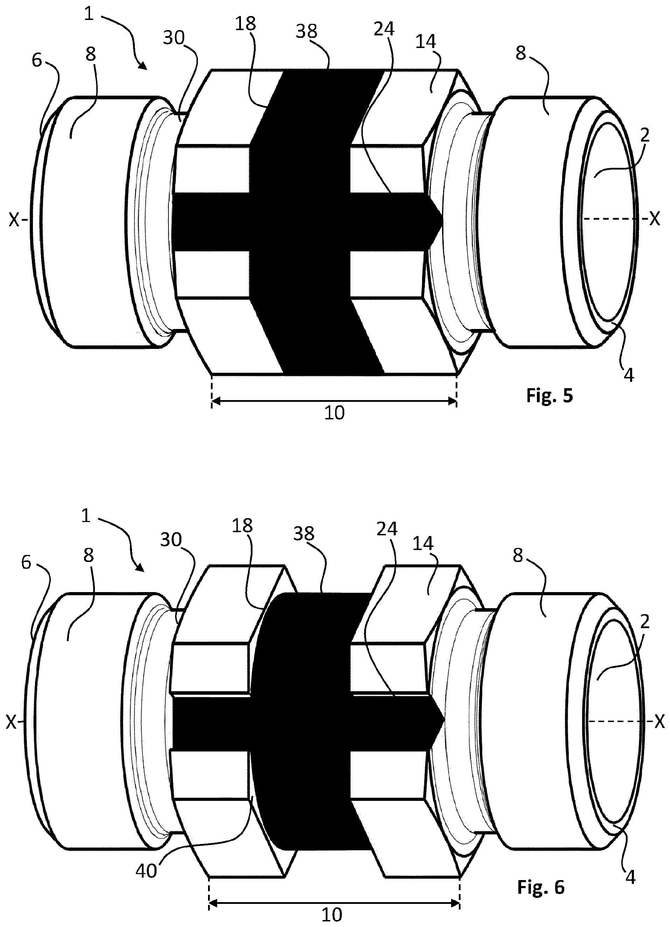

Entsprechend den vorteilhaften Ausführungen in den Figuren 5 bis 8 und 10 ist der Messabschnitt 10 zumindest teilweise zusammen mit den Dehnungsmesssensoren, insbesondere zusammen mit der Sensorik, insbesondere der Verbindungsschnittstelle und/oder der Spannungsquelle, mit einem Kunststoff 38 vergossen. Insbesondere wenn die Verbindungsschnittstelle mit einem Kabel mit der Steuereinheit verbunden ist, ist vorzugsweise zumindest eine Anschlussstelle zum Anschließen der Kabel ausgebildet.

Insbesondere in Figur 5 ist die gesamte Messnut 24 und Aufnahmenut 18, insbesondere über die gesamte Messnuttiefe 26 und/oder Aufnahmenuttiefe 20, mit dem Kunststoff 38 vergossen, so dass eine glatte bzw. homogene Außenwandung 14 des Messabschnitts 10 des Verbindungsstutzens 1 entsteht. Im Ausführungsbeispiel gemäß Figur 9, welches lediglich eine Aufnahmenut 18 aufweist, kann die Aufnahmenut 18 gemäß einer nicht dargestellten Ausführung vorteilhaft über die gesamte Aufnahmenuttiefe 20 mit dem Kunststoff 38 vergossen werden.

Bei dem in den Figuren 6 bis 8 und 10 dargestellten Ausführungsbeispiel sind die Messnuten 24 und/oder Aufnahmenuten 18 zweckmäßig teilweise über die Messnuttiefe 26 und Aufnahmenuttiefe 20 vergossen. Im Ausführungsbeispiel gemäß Figur 10, welches lediglich eine Aufnahmenut 18 aufweist, ist die Aufnahmenut 18 vorteilhaft teilweise über die Aufnahmenuttiefe 20 mit dem Kunststoff 38 vergossen. Insbesondere verbleibt eine Restseitenwand 40 der Aufnahmenut 18, so dass die Klammer 32 oder ein anderes Verbindungselement zur Kontaktierung der vergossenen Verbindungsstelle in der restlich verbleibenden Aufnahmenut 18 angeordnet werden kann.

In einer besonderen Ausführung weist die Sensorik zumindest einen Temperatursensor zur Bestimmung der Umgebungstemperatur und/oder der Temperatur des Verbindungsstutzens 1 auf. Der Temperatursensor ermöglicht es, die Messqualität der Druckmessung durch eine Verrechnung der wärmebedingten Ausdehnungseffekte des in der Fluidleitung fließenden Mediums zu verbessern.

Insbesondere ist der Verbindungsstutzen 1 aus einem Stahl ausgebildet, welcher mit einer Zink-Nickel-Schicht beschichtet ist. Alternativ kann jedoch der Verbindungsstutzen 1 auch aus anderen Werkstoffvarianten ausgebildet sein, sofern der Innendruck im Fluidkanal 2 den Verbindungsstutzen 1 im elastischen Bereich dehnt bzw. verformt, und das Verformungsverhalten derart bekannt ist, dass die Steuereinheit den Innendruck interpretieren kann. Insbesondere kann das Verformungsverhalten mit Versuchen bestimmt werden. Zweckmäßig ist der Verbindungsstutzen 1 vorteilhaft zumindest teilweise aus Edelstahl oder Messing oder Kunststoff 38 ausgebildet.

Die Steuereinheit zum Verbinden mit der Sensorik zur Druckmessung eines Fluiddrucks des Verbindungsstutzens 1 der vorgenannten Art weist Verbindungsmittel zum datentechnischen Verbinden mit der Sensorik des Verbindungsstutzens 1 und Berechnungsmittel zur Berechnung des Fluiddrucks in dem Verbindungsstutzen 1 anhand von empfangenen Daten und anhand von in der Steuereinheit abgespeicherten leitungs- und/oder mediumspezifischen Parametern auf.

Gemäß einer vorteilhaften Ausführung der Steuereinheit sind die Berechnungsmittel zur Berechnung einer Temperatur eines in dem Fluidkanal befindlichen Mediums anhand der Messdaten und der Parameter ausgebildet. Insbesondere kann die Steuereinheit durch die Druckmessung im Fluidkanal 2 eine Temperatur eines in dem Fluidkanal 2 befindlichen Mediums interpretieren. Zweckmäßig kann ein Referenzpunkt zur Ausgangslage bei einer bekannten Temperatur, zumindest des Mediums, und bekannter Dehnung im Messabschnitt 10 bestimmt werden. Von diesem Referenzpunkt aus können über die relative Dehnung unter Einbeziehung der leitungs- und/oder mediumspezifischen Parametern Rückschlüsse auf die Temperatur des Mediums gezogen werden.

Entsprechend der in den Figuren 7 und 8 dargestellten Ausführung weist die Steuereinheit vorzugsweise eine als induktive Verbindungsschnittstelle ausgebildete kabelgebundene Klammer 32 auf. Diese Klammer 32 ist insbesondere dazu ausgebildet, die Aufnahmenut 18 und die darin angeordnete Verbindungsschnittstelle des Verbindungsstutzens 1 zu umgreifen. Vorzugsweise weist die Klammer 32 ein oder mehrere der zuvor zu der Klammer genannten Merkmale auf und wird, wie zu den Figuren 7 und 8 erläutert, an dem Verbindungsstutzen 1 montiert.

### Bezugszeichenliste

- 1: Verbindungsstutzen
- 2: Fluidkanal
- 4: Erstes Anschlussende
- 6: Zweites Anschlussende
- 8: Außengewinde
- 10: Messabschnitt
- 12: Dehnungsmessstreifen
- 13: Dehnmesssensor
- 14: Außenwandung des Messabschnitts
- 16: Trägerfolie
- 18: Aufnahmenut
- 20: Aufnahmenuttiefe
- 22: Aufnahmenutgrund
- 24: Messnut
- 26: Messnuttiefe
- 28: Messnutgrund
- 30: Außenoberfläche des Verbindungsstutzens
- 32: Klammer
- 34: Stecker
- 36: Seitenwände der Aufnahmenut
- 38: Kunststoff
- 40: Restseitenwand
- 42: Abflachung

- X: Fluidkanalachse

## Patentansprüche

1. Verbindungsstutzen (1) für fluidführende Leitungssysteme, aufweisend einen entlang einer Fluidkanalachse (X) verlaufenden Fluidkanal (2), wobei der Fluidkanal (2) an zumindest einem ersten Anschlussende (4) und einem zweiten Anschlussende (6) des Verbindungsstutzens (1) mit Leitungskanälen des Leitungssystems verbindbar ist, wobei zwischen dem ersten Anschlussende (4) und dem zweiten Anschlussende (6) ein Messabschnitt (10) ausgebildet ist, in welchem eine Sensorik zur Druckmessung für ein in dem Fluidkanal (2) fließendes Medium angeordnet ist, wobei die Sensorik eine Verbindungsschnittstelle aufweist, mit der sie mit einer Steuereinheit zur Druckmessung im Fluidkanal (2) verbindbar ist, wobei die Sensorik zur Druckmessung zumindest zwei Dehnungsmessstreifen (12) mit mindestens jeweils einem Dehnmesssensor (13) aufweist, die am Umfang um die Fluidkanalachse (X) versetzt auf einer Außenwandung (14) des Messabschnitts (10) angeordnet sind, wobei in der Außenwandung (14) des Messabschnitts (10) eine umfangsgemäß um die Außenwandung (14) des Messabschnitts (10) verlaufende Aufnahmenut (18) zur Integration einer elektronischen Schaltung der Sensorik und/oder der Dehnungsmessstreifen (12) ausgebildet ist, **dadurch gekennzeichnet, dass** die Dehnungsmessstreifen (12) in jeweils einer in der Außenwandung (14) des Messabschnitts (10) ausgebildeten und parallel zu der Fluidkanalachse (X) verlaufenden Messnut (24) angeordnet sind, wobei die jeweiligen Messnuten (24) einen planen, parallel zur Fluidkanalachse (X) verlaufenden Messnutgrund (28) aufweisen.

2. Verbindungsstutzen (1) nach Anspruch 1,
**dadurch gekennzeichnet, dass** die Dehnungsmessstreifen (12) am Umfang um 90° oder 180° um die Fluidkanalachse (X) versetzt angeordnet sind.

3. Verbindungsstutzen (1) nach Anspruch 1 oder 2,
**dadurch gekennzeichnet, dass** die Dehnungsmessstreifen (12) entlang der Fluidkanalachse (X) versetzt zueinander angeordnet sind.

4. Verbindungsstutzen (1) nach einem der Ansprüche 1 bis 3,
**dadurch gekennzeichnet, dass** die Dehnungsmessstreifen (12) jeweils zwei Dehnmesssensoren (13) auf einer Trägerfolie (16) aufweisen, wobei der erste Dehnmesssensor (13) eine Dehnung in Längsrichtung und der zweite Dehnmesssensor (13) eine Dehnung in Querrichtung misst.

5. Verbindungsstutzen (1) nach einem der Ansprüche 1 bis 4,
**dadurch gekennzeichnet, dass** die Dehnmesssensoren (13) in der Sensorik zu einer Wheatstone'schen Vollbrücke elektrisch geschaltet sind.

6. Verbindungsstutzen (1) nach einem der Ansprüche 1 bis 5,
**dadurch gekennzeichnet, dass** zumindest ein Dehnmesssensor (13) in der Sensorik zur Widerstandsabfrage elektrisch geschaltet ist.

7. Verbindungsstutzen (1) nach einem der Ansprüche 1 bis 6,
**dadurch gekennzeichnet, dass** die Dehnungsmessstreifen (12) hochsensible Dehnungsmessstreifen (12) sind, welche vorteilhaft die Dehnung zumindest mit einer Genauigkeit von 10⁻⁴ mm messen können.

8. Verbindungsstutzen (1) nach einem der Ansprüche 1 bis 7,
**dadurch gekennzeichnet, dass** der Dehnungsmessstreifen (12), insbesondere ein Silizium-Dehnungsmessstreifen (12), an dem Verbindungsstutzen (1) durch eine Kombination von Klebung und Glaslotverfahren montiert ist.

9. Verbindungsstutzen (1) nach einem der Ansprüche 1 bis 8,
**dadurch gekennzeichnet, dass** die jeweiligen Messnuten (24) zur Fluidkanalachse (X) symmetrisch ausgebildet sind.

10. Verbindungsstutzen (1) nach einem der Ansprüche 1 bis 9,
**dadurch gekennzeichnet, dass** die Messnuttiefe (26) des Messnutgrundes (28) der Messnuten (24) maximal dem minimalen Außenumfang des Verbindungsstutzens (1) außerhalb des Messabschnitts (10) entspricht.

11. Verbindungsstutzen (1) nach einem der Ansprüche 1 bis 10,
**dadurch gekennzeichnet, dass** der Verbindungsstutzen (1) zumindest auf einer vom Fluidkanal (2) abweisenden Außenoberfläche (30) eine Korrosionsbeschichtung aufweist, wobei die Dehnungsmessstreifen (12) auf der Korrosionsbeschichtung angeordnet sind.

12. Verbindungsstutzen (1) nach einem der Ansprüche 1 bis 11,
**dadurch gekennzeichnet, dass** eine Spannungsquelle, insbesondere eine Batterie, an dem Verbindungsstutzen (1), insbesondere in der Aufnahmenut (18), angeordnet ist und mittels dieser Spannungsquelle eine Versorgungsspannung an die Sensorik anlegbar ist.

13. Verbindungsstutzen (1) nach einem der Ansprüche 1 bis 12,
**dadurch gekennzeichnet, dass** die Verbindungsschnittstelle der Sensorik als eine elektrisch induktive Verbindungsschnittstelle ausgebildet ist, über die eine elektrische Versorgungsspannung für die Sensorik übertragbar ist.

14. Verbindungsstutzen (1) nach einem der Ansprüche 1 bis 13,
**dadurch gekennzeichnet, dass** die Verbindungsschnittstelle der Sensorik als eine drahtlose Verbindungsschnittstelle ausgebildet ist, über die Daten von und/oder zu der Sensorik übertragbar sind.

15. Verbindungsstutzen (1) nach Anspruch 14,
**dadurch gekennzeichnet, dass** die Verbindungsschnittstelle der Sensorik als eine elektrisch induktive Verbindungsschnittstelle ausgebildet ist, über die Daten von und/oder zu der Sensorik übertragbar sind.

16. Verbindungsstutzen (1) nach Anspruch 14 oder 15,
**dadurch gekennzeichnet, dass** die Verbindungsschnittstelle der Sensorik als ein Senderelement und/oder ein Empfängerelement zur Erzeugung und/oder zum Empfangen eines Funk- oder Bluetooth- oder WiFi-Signals ausgebildet ist.

17. Verbindungsstutzen (1) nach einem der Ansprüche 1 bis 16,
**dadurch gekennzeichnet, dass** der Messabschnitt (10) zumindest teilweise, insbesondere die Messnut (24) und die Aufnahmenut (18), vorzugsweise die gesamte Außenoberfläche (30) des Verbindungsstutzens (1), zusammen mit den Dehnungsmessstreifen (12), insbesondere zusammen mit der Sensorik, insbesondere der Verbindungsschnittstelle und/oder der Spannungsquelle, mit einem Kunststoff (38) vergossen ist.

18. Verbindungsstutzen (1) nach einem der Ansprüche 1 bis 17,
**dadurch gekennzeichnet, dass** die Sensorik einen Temperatursensor zur Bestimmung der Umgebungstemperatur und/oder der Temperatur des Verbindungsstutzens aufweist.

## Claims

1. Connector stud (1) for fluid-conducting line systems, comprising a fluid channel (2) extending along a fluid channel axis (X), wherein the fluid channel (2) is connectable to line channels of the line system at at least a first connection end (4) and a second connection end (6) of the connector stud (1), wherein a measuring section (10) is formed between the first connection end (4) and the second connection end (6), in which a sensor system for pressure measurement for a medium flowing in the fluid channel (2) is arranged, wherein the sensor system has a connection interface with which it is connectable to a control unit for pressure measurement in the fluid channel (2), wherein the sensor system for pressure measurement comprises at least two strain gauge strips (12) with at least one strain measuring sensor (13) each, which are arranged offset around the circumference around the fluid channel axis (X) on an outer wall (14) of the measuring section (10), wherein a receiving groove (18) extending circumferentially around the outer wall (14) of the measuring section (10) is formed in the outer wall (14) of the measuring section (10) for integration of an electronic circuit of the sensor system and/or the strain gauge strips (12),
**characterized in that** the strain gauge strips (12) are each arranged in a measuring groove (24) formed in the outer wall (14) of the measuring section (10) and extending parallel to the fluid channel axis (X), wherein the respective measuring grooves (24) have a planar measuring groove base (28) extending parallel to the fluid channel axis (X).

2. Connector stud (1) according to claim 1,
**characterized in that** the strain gauge strips (12) are arranged offset around the circumference by 90° or 180° around the fluid channel axis (X).

3. Connector stud (1) according to claim 1 or 2,
**characterized in that** the strain gauge strips (12) are arranged offset from each other along the fluid channel axis (X).

4. Connector stud (1) according to one of claims 1 to 3,
**characterized in that** the strain gauge strips (12) each comprise two strain measuring sensors (13) on a carrier foil (16), wherein the first strain measuring sensor (13) measures a strain in longitudinal direction and the second strain measuring sensor (13) measures a strain in transverse direction.

5. Connector stud (1) according to one of claims 1 to 4,
**characterized in that** the strain measuring sensors (13) in the sensor system are electrically connected to form a Wheatstone full bridge.

6. Connector stud (1) according to one of claims 1 to 5,
**characterized in that** at least one strain measuring sensor (13) in the sensor system is electrically connected for resistance measurement.

7. Connector stud (1) according to one of claims 1 to 6,
**characterized in that** the strain gauge strips (12) are highly sensitive strain gauge strips (12) which may advantageously measure the strain at least with an accuracy of 10⁻⁴mm.

8. Connector stud (1) according to one of claims 1 to 7,
**characterized in that** the strain gauge strip (12), in particular a silicon strain gauge strip (12), is mounted on the connector stud (1) by a combination of bonding and glass soldering process.

9. Connector stud (1) according to one of claims 1 to 8,
**characterized in that** the respective measuring grooves (24) are formed symmetrically to the fluid channel axis (X).

10. Connector stud (1) according to one of claims 1 to 9,
**characterized in that** the measuring groove depth (26) of the measuring groove base (28) of the measuring grooves (24) corresponds at most to the minimum outer circumference of the connector stud (1) outside the measuring section (10).

11. Connector stud (1) according to one of claims 1 to 10,
**characterized in that** the connector stud (1) has a corrosion coating at least on an outer surface (30) facing away from the fluid channel (2), wherein the strain gauge strips (12) are arranged on the corrosion coating.

12. Connector stud (1) according to one of claims 1 to 11,
**characterized in that** a voltage source, in particular a battery, is arranged on the connector stud (1), in particular in the receiving groove (18), and by means of this voltage source a supply voltage can be applied to the sensor system.

13. Connector stud (1) according to one of claims 1 to 12,
**characterized in that** the connection interface of the sensor system is formed as an electrically inductive connection interface via which an electrical supply voltage for the sensor system can be transmitted.

14. Connector stud (1) according to one of claims 1 to 13,
**characterized in that** the connection interface of the sensor system is formed as a wireless connection interface via which data can be transmitted from and/or to the sensor system.

15. Connector stud (1) according to claim 14,
**characterized in that** the connection interface of the sensor system is formed as an electrically inductive connection interface via which data can be transmitted from and/or to the sensor system.

16. Connector stud (1) according to claim 14 or 15,
**characterized in that** the connection interface of the sensor system is formed as a transmitter element and/or a receiver element for generating and/or receiving a radio or Bluetooth or WiFi signal.

17. Connector stud (1) according to one of claims 1 to 16,
**characterized in that** the measuring section (10) at least partially, in particular the measuring groove (24) and the receiving groove (18), preferably the entire outer surface (30) of the connector stud (1), together with the strain gauge strips (12), in particular together with the sensor system, in particular the connection interface and/or the voltage source, is encapsulated with a plastic (38).

18. Connector stud (1) according to one of claims 1 to 17,
**characterized in that** the sensor system comprises a temperature sensor for determining the ambient temperature and/or the temperature of the connector stud.

## Revendications

1. Raccord de connexion (1) pour systèmes de conduites transportant des fluides, comprenant un canal de fluide (2) s'étendant le long d'un axe de canal de fluide (X), le canal de fluide (2) pouvant être relié aux canaux de conduite du système de conduites au niveau d'au moins une première extrémité de raccordement (4) et d'une seconde extrémité de raccordement (6) du raccord de connexion (1), une section de mesure (10) étant formée entre la première extrémité de raccordement (4) et la seconde extrémité de raccordement (6), dans laquelle est disposé un système de capteurs pour la mesure de pression d'un milieu s'écoulant dans le canal de fluide (2), le système de capteurs présentant une interface de connexion avec laquelle il peut être relié à une unité de commande pour la mesure de pression dans le canal de fluide (2), le système de capteurs pour la mesure de pression comprenant au moins deux jauges de contrainte (12) avec au moins un capteur de déformation (13) chacune, qui sont disposées sur une paroi externe (14) de la section de mesure (10) de manière décalée circonférentiellement autour de l'axe de canal de fluide (X), une rainure de réception (18) s'étendant circonférentiellement autour de la paroi externe (14) de la section de mesure (10) étant formée dans la paroi externe (14) de la section de mesure (10) pour l'intégration d'un circuit électronique du système de capteurs et/ou des jauges de contrainte (12), **caractérisé en ce que** les jauges de contrainte (12) sont disposées chacune dans une rainure de mesure (24) formée dans la paroi externe (14) de la section de mesure (10) et s'étendant parallèlement à l'axe de canal de fluide (X), les rainures de mesure (24) respectives présentant un fond de rainure de mesure (28) plan s'étendant parallèlement à l'axe de canal de fluide (X).

2. Raccord de connexion (1) selon la revendication 1, **caractérisé en ce que** les jauges de contrainte (12) sont disposées de manière décalée circonférentiellement de 90° ou 180° autour de l'axe de canal de fluide (X).

3. Raccord de connexion (1) selon la revendication 1 ou 2, **caractérisé en ce que** les jauges de contrainte (12) sont disposées de manière décalée les unes par rapport aux autres le long de l'axe de canal de fluide (X).

4. Raccord de connexion (1) selon l'une des revendications 1 à 3, **caractérisé en ce que** les jauges de contrainte (12) comprennent chacune deux capteurs de déformation (13) sur un film porteur (16), le premier capteur de déformation (13) mesurant une déformation dans le sens longitudinal et le second capteur de déformation (13) mesurant une déformation dans le sens transversal.

5. Raccord de connexion (1) selon l'une des revendications 1 à 4, **caractérisé en ce que** les capteurs de déformation (13) sont connectés électriquement dans le système de capteurs pour former un pont complet de Wheatstone.

6. Raccord de connexion (1) selon l'une des revendications 1 à 5, **caractérisé en ce que** au moins un capteur de déformation (13) est connecté électriquement dans le système de capteurs pour l'interrogation de résistance.

7. Raccord de connexion (1) selon l'une des revendications 1 à 6, **caractérisé en ce que** les jauges de contrainte (12) sont des jauges de contrainte (12) hautement sensibles, qui peuvent avantageusement mesurer la déformation avec au moins une précision de 10⁻⁴mm.

8. Raccord de connexion (1) selon l'une des revendications 1 à 7, **caractérisé en ce que** la jauge de contrainte (12), en particulier une jauge de contrainte en silicium (12), est montée sur le raccord de connexion (1) par une combinaison de collage et de procédé de brasage au verre.

9. Raccord de connexion (1) selon l'une des revendications 1 à 8, **caractérisé en ce que** les rainures de mesure (24) respectives sont formées symétriquement par rapport à l'axe de canal de fluide (X).

10. Raccord de connexion (1) selon l'une des revendications 1 à 9, **caractérisé en ce que** la profondeur de rainure de mesure (26) du fond de rainure de mesure (28) des rainures de mesure (24) correspond au maximum à la circonférence externe minimale du raccord de connexion (1) à l'extérieur de la section de mesure (10).

11. Raccord de connexion (1) selon l'une des revendications 1 à 10, **caractérisé en ce que** le raccord de connexion (1) présente au moins sur une surface externe (30) opposée au canal de fluide (2) un revêtement anticorrosion, les jauges de contrainte (12) étant disposées sur le revêtement anticorrosion.

12. Raccord de connexion (1) selon l'une des revendications 1 à 11, **caractérisé en ce qu'**une source de tension, en particulier une batterie, est disposée sur le raccord de connexion (1), en particulier dans la rainure de réception (18), et au moyen de cette source de tension une tension d'alimentation peut être appliquée au système de capteurs.

13. Raccord de connexion (1) selon l'une des revendications 1 à 12, **caractérisé en ce que** l'interface de connexion du système de capteurs est formée comme une interface de connexion électriquement inductive, par laquelle une tension d'alimentation électrique pour le système de capteurs peut être transmise.

14. Raccord de connexion (1) selon l'une des revendications 1 à 13, **caractérisé en ce que** l'interface de connexion du système de capteurs est formée comme une interface de connexion sans fil, par laquelle des données peuvent être transmises depuis et/ou vers le système de capteurs.

15. Raccord de connexion (1) selon la revendication 14, **caractérisé en ce que** l'interface de connexion du système de capteurs est formée comme une interface de connexion électriquement inductive, par laquelle des données peuvent être transmises depuis et/ou vers le système de capteurs.

16. Raccord de connexion (1) selon la revendication 14 ou 15, **caractérisé en ce que** l'interface de connexion du système de capteurs est formée comme un élément émetteur et/ou un élément récepteur pour la génération et/ou la réception d'un signal radio ou Bluetooth ou WiFi.

17. Raccord de connexion (1) selon l'une des revendications 1 à 16, **caractérisé en ce que** la section de mesure (10) au moins partiellement, en particulier la rainure de mesure (24) et la rainure de réception (18), de préférence toute la surface externe (30) du raccord de connexion (1), est noyée avec un plastique (38) ensemble avec les jauges de contrainte (12), en particulier ensemble avec le système de capteurs, en particulier l'interface de connexion et/ou la source de tension.

18. Raccord de connexion (1) selon l'une des revendications 1 à 17, **caractérisé en ce que** le système de capteurs comprend un capteur de température pour déterminer la température ambiante et/ou la température du raccord de connexion.
